(19) **Europäisches Patentamt / European Patent Office / Office européen des brevets**

(11) **EP 1 468 509 B1**

(12) # EUROPEAN PATENT SPECIFICATION

(45) Date of publication and mention
of the grant of the patent:
**14.12.2011 Bulletin 2011/50**

(51) Int Cl.:
**H04B 7/26** (2006.01)

(21) Application number: **02791835.8**

(22) Date of filing: **16.12.2002**

(86) International application number:
**PCT/EP2002/014332**

(87) International publication number:
**WO 2003/061156 (24.07.2003 Gazette 2003/30)**

(54) **VARIABLE FREQUENCY SPACING IN A FDD COMMUNICATION SYSTEM**

VARIABLER FREQUENZABSTAND IN EINEM FDD-KOMMUNIKATIONSSYSTEM

ESPACEMENT DE FREQUENCES VARIABLE DANS UN SYSTEME DE COMMUNICATIONS DUPLEX A REPARTITION DE FREQUENCES

(84) Designated Contracting States:
**AT BE BG CH CY CZ DE DK EE ES FI FR GB GR IE IT LI LU MC NL PT SE SI SK TR**

(30) Priority: **15.01.2002 GB 0200755**

(43) Date of publication of application:
**20.10.2004 Bulletin 2004/43**

(73) Proprietor: **Motorola Solutions, Inc.**
**Schaumburg IL 60196 (US)**

(72) Inventor: **SERFATY, Salomon**
**60951 Doar Gaash (IL)**

(74) Representative: **Treleven, Colin et al**
**Optimus Patents Limited**
**Grove House**
**Lutyens Close**
**Basingstoke**
**Hampshire, RG24 8AG (GB)**

(56) References cited:
**EP-A- 1 058 412       WO-A-00/22755**
**WO-A-01/17288**

• **"Universal Mobile Telecommunications Systems (UMTS);UE Radio Transmission and Reception (FDD) (3GPP TS 25.101 version 4.0.0 Release 4)" ETSI TS 125 101 V4.0.0, XX, XX, 23 April 2001 (2001-04-23), pages 1-68, XP002220544**

**Description**

**Field of the Invention**

This invention relates to a wireless communication system, and a unit and a method for use therein. In particular, it relates to dealing with radio frequency (RF) interference, primarily in frequency division duplex (FDD) communication systems. The invention is applicable to, but not limited to, a mechanism for counteracting jamming of communication frequencies between a mobile or subscriber terminal and a serving base transceiver communication unit in such communication systems.

**Background of the Invention**

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs). The term 'mobile station' generally includes both hand-portable and vehicular mounted radio communication units.

Wireless communication systems are distinguished over fixed communication systems, such as the public switched telephone networks (PSTN), principally in that mobile stations move between, service providers (and/or different BTS) and in doing so encounter varying radio propagation environments.

In a wireless communication system, each BTS has associated with it a particular geographical coverage area (or cell). The coverage area defines a particular range that the BTS can maintain acceptable communications with MSs operating within its serving cell. Often these cells combine to produce an expanded system coverage area.

Multiple access techniques permit simultaneous transmissions from several MSs to a single BTS over a plurality of communications channels. Some channels are used for carrying traffic communications, whilst other channels (which may be logical or dedicated channels) are used for transferring system control information, such as call paging, between the base transceiver stations and subscriber units. Examples of multiple access techniques include: frequency division multiple access (FDMA), time division multiplexing/ multiple access (TDM, TDMA) and code division multiple access (CDMA).

Within such multiple access techniques, different duplex (two-way communication) paths are arranged. Such paths can be arranged in a frequency division duplex (FDD) configuration, whereby a first frequency is dedicated for uplink communication and a second frequency is dedicated for downlink communication. Alternatively, the paths can be arranged in a time division duplex (TDD) configuration, whereby a first time-period is dedicated for uplink communication and a second time period is dedicated for downlink communication.

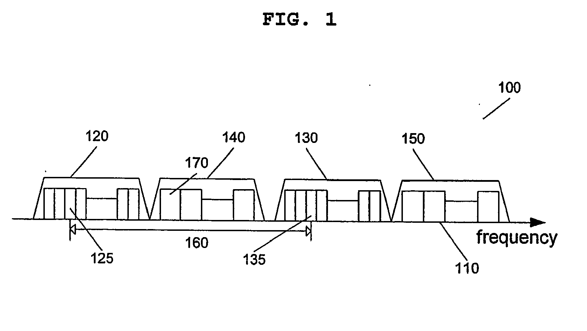

Most modern two-way wireless communication systems and devices utilise frequency division duplex (FDD) operation, as shown in FIG. 1 of the accompanying drawings. In an FDD mode of operation, the frequency spectrum is divided into portions 120, 130, 140, and 150 noted as frequency bands. Pairs of frequency bands are assigned to particular operators, for example frequency bands 120 and 130 or 140 and 150.

Each frequency band is further divided into smaller frequency portions 170, generally referred to as physical channels. The frequency bandwidth of the physical channel 170 is dictated by the communication technology specifications.

Referring to FIG. 1, a pair of physical channels 125, 135 from the paired frequency bands 120 and 130 is used to construct a communication channel. A first physical channel 135 is used for the downlink communication from the base transceiver station (BTS) to the mobile station (MS), often referred to as the outbound channel. In contrast, a second physical channel 125 is used for the uplink communication from the MS to the BTS, often referred to as the inbound channel. The frequency offset, often referred to as frequency duplex spacing, 160 between the outbound channel and the inbound channel is fixed throughout a whole communication system. For particular communication standards or technologies, different frequency offsets may be used, for example in 800-900 MHz cellular standards such as iDEN ™, GSM, IS-136 use 45 MHz spacing. Conversely, in the 350-500 MHz region to be used in the TETRA (terrestrial trunked radio) standard system in Europe as specified by ETSI (the European Telecommunication Standards Institute), a typical frequency spacing between the outbound and inbound frequency bands is 10 MHz.

In wireless communication systems, it is known that radio frequency (RF) interference may affect the quality of a communication link, particularly in cellular systems. In cellular communication systems, this is due to the communication resource being limited to a number of frequencies, where the same frequencies are intelligently reused within a given geographical area, in order to provide wide area coverage and capacity.

Automatic frequency planning (AFP) is arguably the most challenging and time consuming task in designing a mobile communication network. Effective usage of the frequency spectrum, one of the scarcest resources for any operator, leads to both better communication network quality and increased capacity. AFP effectively assigns frequency sub-sets to different BTS to reduce any mutual interference. Another known method to reduce interference in a wireless communication system is to incorporate spread spectrum or frequency hopping technology.

However, frequency planning does not provide a real-time solution to the problem of interference, as the plans are generally based on anticipated statistical traffic models. Moreover, since radio wave propagation is affected by changing meteorological conditions, the level of interference may vary according to the weather conditions.

The allocation of portions of spectrum to individual users, systems, and operators offers some protection between the frequency bands. However, with a limited frequency resource radio frequency interference cannot be wholly removed.

Frequency hopping can provide a statistical improvement in resistance to interference, for example in global system mobile (GSM) communication networks. However, frequency-hopping techniques are, by their very nature, highly complex and very few GSM networks deploy this technology in practice. Furthermore, the implementation of spread spectrum techniques results in very wideband signal transmissions, typically of the order of between 1 to 5 MHz. This is compared to typical (non spread spectrum) cellular communication systems, where a frequency band of between 12.5 KHz and 200 KHz is allocated for signal transmissions.

In communication systems, the most sensitive communication link is the control channel or paging channel. The control channel is used for exchange of various control information between two devices and, in the case of a cellular system, between a BTS and any MSs operating within its coverage range. Every service to a MS is established using information exchange on the control channel, such as call set-up, message delivery, etc.

Hence, when a control channel is blocked (jammed) in any direction, no service can be provided to any MS within a cell. None of the above interference avoidance techniques provides an acceptable solution for "jamming" of the communication resource. Jamming of a communication resource, in this context, is caused by a third party intentionally generating one or more dedicated interference signals to attack the communication frequencies/links in a particular geographical area.

Anti-jamming techniques find particular use in military scenarios, where the operators require that several specific operational issues have to be addressed such as a high-grade security, survivability, and jamming immunity.

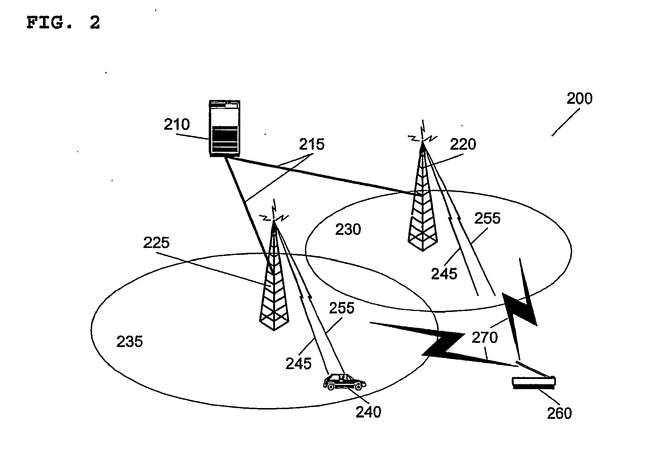

Referring now to FIG. 2 of the accompanying drawings, a typical known wireless communication system 200 is illustrated. The wireless communication system 200 incorporates a Central Control Switch or so-called Mobile Switching Centre (MSC) 210, a number of remote Base Transceiver Stations (BTS) 220, 225 that are operably connected to MSC 210 via site links 215. The MSs 240 move throughout the coverage 230, 235.

A single communication link consists of two frequencies: outbound frequency $f_1$ and inbound frequency $f_2$, marked as 245 and 255 respectively, each frequency to be used for communication in certain direction between the MS 240 and the BTS 225. Notably, the offset between the two frequencies is pre-defined and fixed for the whole system.

Any wireless communication link, i.e. communication link 245 or 255, is a potential subject to be jammed by an interfering signal 270 generated by an adversary/jammer 260. In general, the outbound link 245 from BTS 225 to MS 240 is a continuous signal while the inbound communication link 255 from the MS 240 to the BTS 225 uses burst transmissions.

The inbound communication link 255 is considered to be more vulnerable and is therefore the preferred target for jamming activity due to the reduced transmission power and low antenna positioning of mobile communication units such as MS 240.

Referring to FIG. 1 and FIG. 2, the potential jamming equipment 260 will often be configured to scan one or more downlink frequency bands. By recording channels that have existing downlink transmissions 245, for example a physical channel 170, a would-be jammer/attacker would be arranged to recognise continuous transmissions from the BTS 225, and interpret this channel 170 as being a control channel frequency.

Given that the frequency spacing 170 between the inbound 255 link and outbound link 245 is always constant, and can be easily recovered for the particular system, the jamming equipment 260 would be tuned to transmit an interfering signal 270 on the corresponding inbound frequency(ies) 255 to jam any communication from the MS 240 to the BTS 225.

Unfortunately, modern jamming equipment can also transmit a jamming signal 270 on several frequencies simultaneously.

Thus, there currently exists a need to provide a communication system; a communication unit and method of communication wherein the abovementioned disadvantages associated with known jamming techniques may be alleviated.

EP-A-1,058,421 describes a method of transmission in a FDD (frequency division duplex) radio communication system in which downlink communications are offset in frequency relative to uplink communications. In some assigned frequency bands for use by different operators, in which the assigned downlink band has a fixed offset in frequency relative to the assigned uplink band, there are multiple carrier frequencies available for the downlink and uplink communications. The method allows flexible assignment of different frequency pairs from such assigned downlink and uplink bands to satisfy capacity requirements. However, signalling channels provided by the assigned bands have a fixed difference in frequency between the uplink channel and the downlink channel.

**Statement of Invention**

In accordance with a first aspect of the present invention there is provided a base transceiver station system as claimed in claim 1 of the accompanying claims.

In accordance with a second aspect of the present invention there is provided a wireless communication system as claimed in claim 6 of the accompanying claims.

In accordance with a third aspect of the present invention there is provided a method of operation in accordance with claim 10 of the accompanying claims.

Further features of the present invention are provided in the accompanying claims which are dependent claims.

In summary, the inventors of the present invention have recognised that, predominantly, a fixed channel spacing between outbound and inbound channels in a wireless communication system assists a third party adversary to determine the frequency to be used to jam inbound communications. Therefore, one aspect of the present invention introduces an arbitrary communication resource spacing obtained by randomly generating and applying in a plurality of transceivers duplex frequency spacings, within a communication system, each for example being a frequency offset for use within the particular frequency band of an operating system.

In this manner, the use of variable and randomly selected spacing between the inbound and outbound channels, particularly when coupled to a system's frequency planning, improves significantly the resistance of say, a wireless FDD communication system to an adversary attempting to jam the inbound communication link(s). In particular, as a BTS controller generates arbitrary frequency pairs for each BTS transceiver, it is difficult for a "jammer" to deduce easily the inbound frequency from the outbound frequency, as there is no constant frequency offset.

Preferably, the selection of random communication offset resources is taken at a system level, from the entire system frequency bands. This enables a controller, say in a mobile switching centre, to generate a large number of optional permutations for the duplex spacing to be used. This enables the overall system interference characteristics to be optimised, and the opportunities for targeted jamming to be alleviated.

Additionally, a preferred mechanism securely informs remote subscriber units about the frequency duplex spacing to be used via, for example, an encrypted message. This prevents any eavesdropping and subsequent analysis by any 'jammer'.

**Brief description of the accompanying drawings**

FIG. 1 shows a known frequency resource diagram of a frequency division duplex communication system; and

FIG. 2 shows a diagram of a known radio communication system indicating the aforementioned "jamming" problem. - Embodiments of the present invention will be described by way of example with reference to the following accompanying drawings:

FIG. 3 is a schematic arrangement diagram of a trunked radio communication system that can be adapted to support the various inventive concepts of a preferred embodiment of the present invention; and

FIG. 4 is a schematic block diagram showing a Base Transceiver Station adapted to employ the inventive concepts of a preferred embodiment of the invention.

**Description of embodiments of the invention**

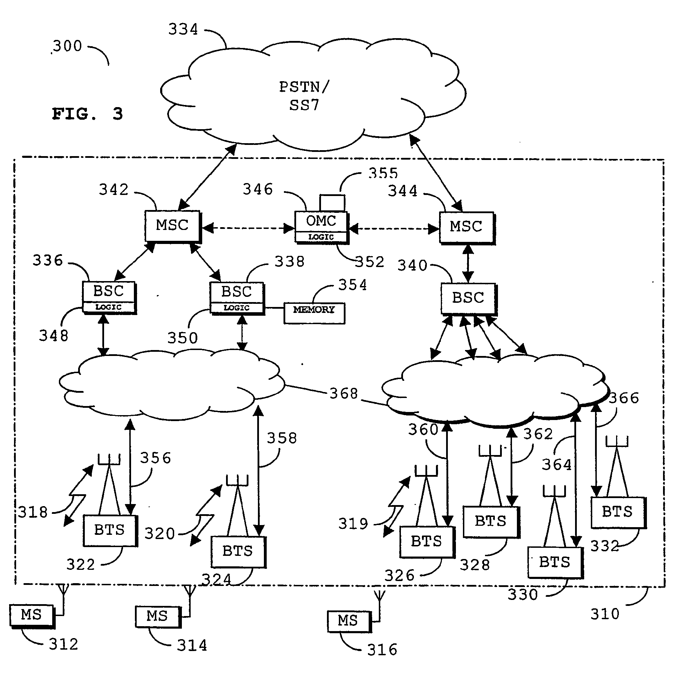

FIG. 3 shows, in outline, a trunked radio communications system 300 supporting a TETRA air-interface communication protocol in accordance with a preferred embodiment of the invention. The European Telecommunications Standards Institute (ETSI) has defined the TETRA air interface. Generally, the air-interface protocol is administered from base sites that are geographically spaced apart - one base site supporting a cell or sectors of a cell.

A plurality of subscriber units, such as a mixture of MSs 312-316 and fixed terminals (not shown), communicate over a selected air-interface 318-320 with a plurality of serving base transceiver stations (BTS) 322-332. The BTSs 322-332 may be connected to a conventional public-switched telephone network (PSTN) 334 through base station controllers (BSCs) 336-340 and mobile switching centres (MSCs) 342-344. Each BTS 322-332 is principally designed to serve its primary cell, with each BTS 322-332 containing one or more transceivers.

Each BSC 336-340 may control one or more BTSs 322-332, with BSCs 336-340 generally interconnected through MSCs 342-344. Each BSC 336-340 is therefore able to communicate with one another, if desired, to pass system administration information therebetween, with BSCs responsible for establishing and maintaining control channel and traffic channels to serviceable MSs affiliated therewith. The interconnection of BSCs therefore allows the trunked radio communication system to support handover of the MSs between cells.

Each MSC 342-344 provides a gateway to the PSTN 334, with MSCs interconnected through an operations and management centre (OMC) 346 that administers general control of the trunked radio system 300, as will be understood by those skilled in the art. The various system elements, such as BSCs 336-338 and OMC 346, will include control logic 348-352, with the various system elements usually having associated memory element 354 (shown only in relation to BSC 338 for the sake of clarity).

The memory element 354 typically stores historically compiled operational data as well as in-call data, system information and control algorithms.

In the context of the present invention, BTSs 322-332 have been adapted to implement the inventive concepts hereinafter described. The BTSs 322-332 include a controller having a memory element operably coupled thereto. The memory element of the BTSs has been adapted to store duplex frequency spacing data, i.e. frequency spacing value (s) between BTS outbound and inbound channels, where the duplex frequency spacing data is variable and modified in accordance with the output of a a pseudo random number generator (not shown) to vary the duplex spacing frequencies.

Furthermore, a transceiver TS of the BTSs has also been adapted to communicate the various duplex frequency spacing data to its served MS(s) so that they can operate on the assigned frequencies. Preferably, each transceiver TS is assigned with its own frequency pair. It is within the contemplation of the invention that one or more MSC 342-344 may also be adapted to set the various duplex frequency spacing data to its affiliated BTSs. In such a case, the one or more MSC 342-344 may control the operating frequencies of all transceivers, across a number of BTSs.

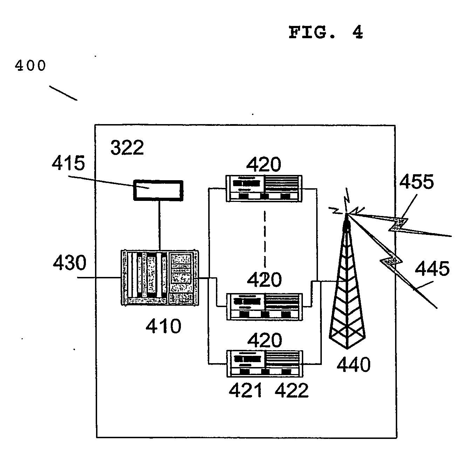

Referring now to FIG. 4, a base transceiver station (BTS) 322, adapted in accordance with a preferred embodiment of the present invention, is shown in greater detail. The BTS 322 consists of several transceivers 420 arranged in a parallel form and each operably coupled via a communication link 430 to a central switch 430. An antenna 440 is operably coupled to each transceiver 420 to facilitate radio communication between the respective transceiver 420 of the BTS 322 and the served MSs 312-316.

Each transceiver 420 has a transmission element 421 that generates downlink transmissions on one transmit physical channel, and a receiving element 422 that receives and processes uplink transmissions on the corresponding receive physical channel. In general, the elements 421 and 422 of the same transceiver 420 operate on frequencies separated by the system offset. Each transceiver 420 is assigned with its own frequency pair and the controller 410 controls the operation of all transceivers 420.

In accordance with a preferred embodiment of the present invention, the duplex spacing between the outbound channel and inbound channel of at least one, but preferably each, transceiver 420 is randomly generated. The particular duplex spacing selected for the at least one transceiver is preferably determined by the controller 410. However, it is within the contemplation of the invention that any other suitable element in the wireless communication system can set the (substantially) random duplex spacing to be used by a particular, or each, transceiver, for example a MSC 342 or OMC 346. Clearly as some frequency pairs are not permissible, the generation of duplex frequency pairs can be considered as substantially random.

In accordance with a preferred embodiment of the present invention, the BTS 322 informs its served MS(s) of the selected duplex spacing by including the information in an encrypted message. Moreover, instead of having a discrete number of pre-defined frequencies as shown in the prior art duplex frequency spacing 170 of FIG. 1, any frequency in the band is valid.

An exemplary message format, for the transmission to the served MS(s) may be in the form given in Table 1.

Table 1: Channel configuration message format:

| TS-1 frequency ID | Offset ID-a | Change validity |
|---|---|---|
| TS-2 frequency ID | Offset ID-b | Change validity |
| ............ | ............ | ............ |
| TS-n frequency ID | Offset ID-x | Change validity |

Referring to Table 1, when implemented by the controller 410 of FIG. 4, the TS-1 frequency identifier (ID) is the outbound frequency indication produced by transmission element 421 of a particular transceiver 420. The message from the BTS informs the receiving MS, say MS 312, of the duplex spacing (offset) ID (ID-a) associated with that particular frequency ID. This offset ID identifies the specific frequency offset to be used by the MS(s) for the corresponding inbound transmissions.

In addition a change validity element is included to indicate circumstances, for example, days, time periods, etc. where the TS-1 frequency ID and associated offset ID are valid. Alternatively, or in addition, the validity can be expressed in terms of a time-stamp and can be based for example on the TDMA frame counting mechanism, or on a system's absolute time, as broadcast in many modern wireless communication systems. Furthermore, it is envisaged that the duplex spacing changes can be applied to all TSs at the same time, or alternatively on an individual or group basis.

In operation, the particular frequency spacing is preferably configured as follows. Let us assume that during system configuration BTS 322 has been assigned, for its outbound transmissions, the frequency set:

$$D = \{f_1, \ f_2, \ ..., \ f_n\} \qquad [1]$$

Furthermore, let us assume that BTS 322 has been assigned, for its inbound transmissions, the frequency set:

$$U = \{f_1', \ f_2', \ ..., \ f_n'\} \qquad [2]$$

where: $f_i - f_i' =$ constant, but $f_i - f_i'$ does not $= f_i - f_j'$.

The BTS controller 410 generates frequency pairs $(f_1, f_1')$, $(f_2, f_2')$, etc. and informs each transceiver 420 of the particular frequency pair that it is to use. It is envisaged that, instead of directly pairing the sets D and U, the controller 410 may pair D with a permutation of the set U. For example, if the set U contains n frequencies, there are n! (factorial n) possible permutations that can be allowed.

In practice, some of these permutations may need to be discarded as they may produce pairs $(f_i, f_j')$ with a frequency difference, which does not conform to the physical limitations of the transceiver 420. Once these unacceptable permutations have been deleted from the list, the BTS 322 informs the MSs of acceptable combinations using encrypted messages transmit on the outbound link.

Alternatively, a similar solution can be considered at a system level. For example, MSC 342 or OMC 346 can compute permutations for the whole system, and transmit the results to each individual BTS 322. In this option, the MSC 342 or OMC 346 has to take into account the frequency planning requirements of the whole system so as to reduce, as much as possible, the resultant interference between different channels in different cells. In this manner, the overall system interference characteristics can be optimised. Furthermore, it is envisaged that such system-based frequency management encompasses pairs of frequency bands being assigned to particular system operators, to minimise frequency interference opportunities within a particular operator's spectrum.

The various adapted components within BTS 322, MS 312, MSC 342 and/or OMC 346 can be realised in discrete or integrated component form. More generally, the functionality associated with generating, administering and utilising variable communication resource (e.g. frequency duplex spacing) offsets may be implemented in a respective communication unit (BTS 322, MSC 342, OMC 346) in any suitable manner. For example, new apparatus may be added to a conventional communication unit, or alternatively existing parts of a conventional communication unit may be adapted, for example by reprogramming one or more processors therein. As such, the required adaptation, for example the categories in the message Table 1, or the algorithm used in the controller 410 to generate a random variable communication resource offset, may be implemented in the form of processor-implementable instructions stored on a storage medium, such as a floppy disk, hard disk, PROM, RAM or any combination of these or other storage multimedia, as will be appreciated by those skilled in the art.

The use of variable spacing between the inbound and outbound channels, particularly when coupled to a system's frequency planning, improves significantly the resistance of say, a wireless FDD communication system to an adversary attempting to jam the inbound communication link(s). As the preferred method avoids the use of a fixed (constant) frequency offset, a potential "jammer" cannot deduce easily the inbound frequency from the outbound frequency.

Although the invention has been described in general with reference to the TETRA communication specification, utilising a TDMA access protocol, the inventive concepts contained herein are clearly applicable to alternative radio communication system technologies, such as GSM, UMTS 3GPP, GPRS, etc. operating similar or alternative access protocols. Furthermore, the invention finds particular application in systems that combine FDM and TDM technologies, such as TETRA, GSM, etc.

Although the invention has also been described with reference to an FDD-based communication system, it is envisaged that the same inventive concepts can be applied to alternative duplex technologies, such as a TDD-based system. In this context, instead of providing pre-defined time-slots for inbound and outbound communications, on particular frequencies, the paired, individual time slots can be randomly varied.

It is also within the contemplation of the invention that accommodation of alternative message formats, and/or associated data, can be made using the inventive concepts described herein. The invention is therefore not to be considered as being limited to the message format and/or associated data described in Table 1. For example, the messages may be transmitted in traffic or signalling channels, and may be included at various positions (header, data, tail, etc.) in, for example, a packet data transmission.

Whilst specific, and preferred, implementations of the present invention are described above, it is clear that one skilled in the art could readily apply further variations and modifications of such inventive concepts within the scope of the accompanying claims.

Thus, a wireless communication system, a communication unit and method of communication have been provided that address the jamming problems, as previously described in relation to known wireless communication systems.

In the accompanying claims, the bracketed reference numerals are for illustration only.

**Claims**

1. A base transceiver station (322) adapted to operate in a wireless communication system (300), the base transceiver station (322) comprising a plurality of transceivers (420), each including a radio transmitter (421) for transmitting to at least one remote unit (312-316) in the communication system over an outbound communication channel and a radio receiver (422) for receiving from the at least one remote unit (312-316) over an inbound communication channel, the inbound communication channel having an offset in frequency relative to the outbound channel:

    said base transceiver station (322) being operably coupled to an element (410, 342, 346) for randomly generating a plurality of different offsets in frequency for use by respective ones of the plurality of transceivers, and each of the said plurality of transceivers (420) being operable to receive an indication of one of the different offsets from the said element (410, 342, 346) and operable to use for its outbound and inbound transmissions a pair of channels having the indicated offset in frequency, the offset used by the said transceiver (420) thereby being an offset which has been randomly generated, which is variable and which differs between said transceivers.

2. A base transceiver station (322) according to claim 1, further operable to receive the indication of the different offsets in a secure manner from the element (410, 342, 346) for use by the different transceivers (420) .

3. A base transceiver station (322) according to claim 1 or claim 2, wherein said element comprises a controller (410) included within the said base transceiver station (322).

4. A base transceiver station (322) according to any one of the preceding claims, being operable to transmit (445) an encrypted message to the at least one remote unit (312-316) served by the station (322) on an outbound communication channel, wherein said encrypted message informs said at least one remote unit (312-316) of a one of the plurality of different frequency offsets relative to the outbound channel of a transceiver (420) of the station (322), which the at least one remote unit is to use in determining an inbound channel to use in communicating with the transceiver (420).

5. A base transceiver station (322) according to claim 4, wherein said encrypted message also includes a validity indicator indicating a validity period during which the one of the plurality of frequency offsets is to be applied.

6. A wireless communication system (300) comprising at least one base transceiver station (322) according to any one of the preceding claims 1, 2, 4 and 5 and a plurality of remote units (312-316) operable to be served with a communication resource (318-320) by the at least one base transceiver station (322).

7. A system according to claim 6, further including a plurality of base transceiver stations (322) each of which is a station according to any one of preceding claims 1, 2, 4 and 5 and each of which is operable to serve a plurality of remote communication units (312-316), and an element (342, 346) for randomly generating a plurality of different offsets in frequency for use by different respective transceivers of the system, said element (342, 346) being included within an installation (342, 346) of said wireless communication system (300) outside the plurality of base transceiver stations and being operably coupled to said plurality of base transceiver stations and operable to randomly generate variable offsets at a system level for use in said plurality of base transceiver stations.

8. A system according to claim 6 or claim 7 which is operable using a time division multiplexing / multiple access (TDMA) communication protocol.

9. A system according to claim 8 and wherein the system is operable using a terrestrial truncked radio (TETRA) standard protocol.

10. A method of operation in a wireless communication system (300) including at least one base transceiver station (322) serving a remote unit (312-316) with a communication resource (318-320), the at least one base transceiver station (322) comprising a plurality of transceivers (420) having a radio transmitter (421) that transmits to the remote unit (312-316) on an outbound communication channel and a radio receiver (422) which receives from the remote unit (312-316) on an inbound communication channel, the inbound communication channel having an offset in frequency relative to the outbound channel, the method including the steps of:

randomly generating by an element (410,342, 346), operably included in or coupled to said at least one base transceiver station (322), a plurality of different frequency offsets, providing an indication of the different offsets to the at least one base transceiver station (322) for use by the different transceivers (420) of the at least one station (322), and using the different randomly generated offset provided to each of the transceivers (420) as a variable frequency spacing between a pair of channels for each respective transceiver's outbound and inbound transmissions.

11. A method according to claim 10 wherein the steps of randomly generating and providing an indication of said offsets is performed by a controller (410) included within the base transceiver station (322).

12. A method according to claim 10 wherein the steps of randomly generating and providing an indication of said offsets is performed at a system level by a central controller (342, 346) to configure communication resource offsets for use in each of a plurality of base transceiver stations (322-332).

13. A method according to any one of preceding claims 10, 11 or 12, the method further including:

transmitting an encrypted message, by said at least one base transceiver station (322), to the remote unit (312-316) on an outbound communication resource, wherein said encrypted message informs the remote unit (312-316) of the offset in frequency to use in determining a channel to use for inbound communications to the transceiver (420) .

14. A method according to Claim 13, wherein the encrypted message includes a validity indicator indicating a validity period during which the offset is to be applied.

**Patentansprüche**

1. Basisstation (engl.: base transceiver station) (322), geeignet, in einem drahtlosen Kommunikationssystem (300) zu arbeiten, wobei die Basisstation (322) eine Mehrzahl von Transceivern (420) umfasst, jeder beinhaltend einen Funksender (421) zum Übertragen an zumindest eine entfernte Einheit (312-316) in dem Kommunikationssystem über einen ausgehenden Kommunikationskanal und einen Funkempfänger (422) zum Empfangen von der zumindest einen entfernten Einheit (312-316) über einen eingehenden Kommunikationskanal, wobei der eingehende Kommunikationskanal einen Frequenz-Offset relativ zu dem ausgehenden Kanal hat:

wobei die Basisstation (322) betriebsfähig gekoppelt ist an ein Element (410, 342, 346) zum zufälligen Erzeugen einer Mehrzahl von unterschiedlichen Frequenz-Offsets zur Verwendung durch entsprechende von der Mehrzahl von Transceivern und wobei jeder von der Mehrzahl von Transceivern (420) betriebsfähig ist zum Empfangen einer Anzeige eines der unterschiedlichen Offsets von dem Element (410, 342, 346) und betriebsfähig ist zum Verwenden eines Paars von Kanälen, die den angezeigten Frequenz-Offset haben, für seine ausgehenden und eingehenden Übertragungen, wobei der von dem Transceiver (420) verwendete Offset dabei ein Offset ist, der zufällig erzeugt wurde, variabel ist und sich zwischen den Transceivern unterscheidet.

2. Basisstation (322) gemäß Anspruch 1, außerdem betriebsfähig, die Anzeige der unterschiedlichen Offsets auf eine sichere Weise von dem Element (410, 342, 346) zur Verwendung durch die unterschiedlichen Transceiver (420) zu empfangen.

3. Basisstation (322) gemäß Anspruch 1 oder Anspruch 2, wobei das Element eine Steuereinheit (410) umfasst, die in der Basisstation (322) enthalten ist.

**4.** Basisstation (322) gemäß einem der vorhergehenden Ansprüche, betriebsfähig, eine verschlüsselte Nachricht zu der zumindest einen entfernten Einheit (312-316) zu übertragen (445), die von der Station (322) auf einem ausgehenden Kommunikationskanal bedient wird, wobei die verschlüsselte Nachricht die zumindest eine entfernte Einheit (312-316) über einen von der Mehrzahl von verschiedenen Frequenz-Offsets relativ zu dem ausgehenden Kanal eines Transceivers (420) der Station (322) informiert, den die zumindest eine entfernte Einheit beim Bestimmen eines beim Kommunizieren mit dem Transceiver (420) zu verwendenden eingehenden Kanals zu verwenden hat.

**5.** Basisstation (322) gemäß Anspruch 4, wobei die verschlüsselte Nachricht auch einen Gültigkeitsindikator enthält, der eine Gültigkeitsdauer anzeigt, während der der eine von der Mehrzahl von Frequenz-Offsets anzuwenden ist.

**6.** Drahtloses Kommunikationssystem (300), umfassend zumindest eine Basisstation (322) gemäß einem der vorhergehenden Ansprüche 1, 2, 4 und 5 und eine Mehrzahl von entfernten Einheiten (312-316), betriebsfähig, von der zumindest einen Basisstation (322) mit einer Kommunikationsressource (318-320) bedient zu werden.

**7.** System gemäß Anspruch 6, außerdem beinhaltend eine Mehrzahl von Basisstationen (322), von denen jede eine Station gemäß einem der vorhergehenden Ansprüche 1, 2, 4 und 5 ist und von denen jede betriebsfähig ist, eine Mehrzahl von entfernten Kommunikationseinheiten (312-316) zu bedienen, und ein Element (342, 346) zum zufälligen Erzeugen einer Mehrzahl von unterschiedlichen Frequenz-Offsets zur Verwendung durch unterschiedliche entsprechende Transceiver des Systems, wobei das Element (342, 346) in einer Installierung (342, 346) des drahtlosen Kommunikationssystems (300) außerhalb der Mehrzahl von Basisstationen enthalten ist und betriebsfähig an die Mehrzahl von Basisstationen gekoppelt ist und betriebsfähig ist, variable Offsets auf einer Systemebene zur Verwendung in der Mehrzahl von Basisstationen zufällig zu erzeugen.

**8.** System gemäß Anspruch 6 oder Anspruch 7, das unter Verwendung eines Zeitmultiplex/Mehrfachzugriff (engl.: time division multiplexing / multiple access, TDMA) -Kommunikationsprotokolls betriebsfähig ist.

**9.** System gemäß Anspruch 8, wobei das System unter Verwendung eines terrestrischen Bündelfunk (engl.: terrestrial truncked radio, TETRA) -Standardprotokolls betriebsfähig ist.

**10.** Betriebsverfahren in einem drahtlosen Kommunikationssystem (300), das zumindest eine eine entfernte Einheit (312-316) mit einer Kommunikationsressource (318-320) bedienende Basisstation (322) beinhaltet, wobei die zumindest eine Basisstation (322) eine Mehrzahl von Transceivern (420) mit einem Funksender (421), der zu der entfernten Einheit (312-316) auf einem ausgehenden Kommunikationskanal überträgt, und einem Funkempfänger (422), der von der entfernten Einheit (312-316) auf einem eingehenden Kommunikationskanal empfängt, umfasst, wobei der eingehende Kommunikationskanal einen Frequenz-Offset relativ zu dem ausgehenden Kanal hat, wobei das Verfahren die folgenden Schritte beinhaltet:

zufälliges Erzeugen einer Mehrzahl von unterschiedlichen Frequenz-Offsets durch ein Element (410, 342, 346), das betriebsfähig enthalten ist in oder gekoppelt ist an die zumindest eine Basisstation (322),
der zumindest einen Basisstation (322) eine Anzeige der unterschiedlichen Offsets zur Verwendung durch die unterschiedlichen Transceiver (420) der zumindest einen Station (322) Bereitstellen, und
Verwenden der unterschiedlichen zufällig erzeugten Offsets, die jedem der Transceiver (420) bereitgestellt werden, als einen variablen Frequenzabstand zwischen einem Paar von Kanälen für ausgehende und eingehende Übertragungen von jedem entsprechenden Transceiver.

**11.** Verfahren gemäß Anspruch 10, wobei die Schritte des zufälligen Erzeugens und Bereitstellens einer Anzeige der Offsets von einer Steuereinheit (410) durchgeführt werden, die in der Basisstation (322) enthalten ist.

**12.** Verfahren gemäß Anspruch 10, wobei die Schritte des zufälligen Erzeugens und Bereitstellens einer Anzeige der Offsets auf einer Systemebene von einer zentralen Steuereinheit (342, 346) durchgeführt werden, um Kommunikationsressourcen-Offsets zur Verwendung in jeder von der Mehrzahl von Basisstationen (322-332) zu konfigurieren.

**13.** Verfahren gemäß einem der vorhergehenden Ansprüche 10, 11 oder 12, wobei das Verfahren außerdem umfasst:

Übertragen einer verschlüsselten Nachricht von der zumindest einen Basisstation (322) zu der entfernten Einheit (312-316) auf einer ausgehenden Kommunikationsressource,
wobei die verschlüsselte Nachricht die entfernte Einheit (312-316) über den beim Bestimmen eines für eingehende Kommunikationen zu dem Transceiver (420) zu verwendenden Kanals zu verwendenden Frequenz-Offset informiert.

14. Verfahren gemäß Anspruch 13, wobei die verschlüsselte Nachricht einen Gültigkeitsindikator enthält, der eine Gültigkeitsdauer anzeigt, während der der Offset anzuwenden ist.

## Revendications

1. Station émetteur-réceptrice de base (322) adaptée pour fonctionner dans un système de communication sans fil (300), la station émettrice-réceptrice de base (322) comprenant une pluralité d'émetteurs-récepteurs (420), qui contiennent chacun un émetteur radio (421) pour émettre à destination d'au moins une unité distante (312-216) dans le système de communication sur un canal de communication sortant et un récepteur radio (422) pour recevoir en provenance de l'au moins une unité distante (312-316) sur un canal de communication entrant, le canal de communication entrant présentant un décalage de fréquence par rapport au canal sortant :

   ladite station émettrice-réceptrice de base (322) étant couplée fonctionnellement à un élément (410, 342, 346) pour générer de manière aléatoire une pluralité de décalages de fréquence différents destinés à être utilisés par des émetteurs-récepteurs respectifs de la pluralité d'émetteurs-récepteurs, et chaque émetteur-récepteur de ladite pluralité d'émetteurs-récepteurs (420) étant apte à recevoir une indication de l'un des différents décalages en provenance dudit élément (410, 342, 346) et étant apte à utiliser pour ses transmissions sortantes et entrantes une paire de canaux ayant le décalage de fréquence indiqué, le décalage utilisé par ledit émetteur-récepteur (420) étant ainsi un décalage qui a été généré de manière aléatoire, qui est variable et qui diffère entre lesdits émetteurs-récepteurs.

2. Station émetteur-réceptrice de base (322) selon la revendication 1, également apte à recevoir de manière sûre en provenance de l'élément (410, 342, 346) l'indication des différents décalages à utiliser par les différents émetteurs-récepteurs (420).

3. Station émetteur-réceptrice de base (322) selon la revendication 1 ou la revendication 2, dans laquelle ledit élément comprend un contrôleur (410) inclus dans ladite station émettrice-réceptrice de base (322).

4. Station émetteur-réceptrice de base (322) selon l'une quelconque des revendications précédentes, apte à émettre (445) un message chiffré à destination de l'au moins une unité distante (312-316) desservie par la station (322) sur un canal de communication sortant, ledit message chiffré informant ladite au moins une unité distante (312-316) de l'un de la pluralité de décalages de fréquence différents par rapport au canal sortant d'un émetteur-récepteur (420) de la station (322), que l'au moins une unité distante doit utiliser pour déterminer un canal entrant à utiliser pour communiquer avec l'émetteur-récepteur (420).

5. Station émetteur-réceptrice de base (322) selon la revendication 4, dans laquelle ledit message chiffré comprend également un indicateur de validité indiquant une période de validité pendant laquelle doit être appliqué ledit décalage de la pluralité de décalages de fréquence.

6. Système de communication sans fil (300) comprenant au moins une station émettrice-réceptrice de base (322) selon l'une quelconque des revendications précédentes 1, 2, 4 et 5, et une pluralité d'unités distantes (312-316) aptes à être desservies en une ressource de communication (318-320) par l'au moins une station émettrice-réceptrice de base (322).

7. Système selon la revendication 6, comprenant en outre une pluralité de stations émettrices-réceptrices de base (322), qui sont chacune une station selon l'une quelconque des revendications précédentes 1, 2, 4 et 5, et chacune aptes à desservir une pluralité d'unités de communication distantes (312-316), et un élément (342, 346) pour générer de manière aléatoire une pluralité de décalages de fréquence différents destinés à être utilisés par différents émetteurs-récepteurs respectifs du système, ledit élément (342, 346) étant inclus dans une installation (342, 346) dudit système de communication sans fil (300) en dehors de la pluralité de stations émettrices-réceptrices de base et étant couplé fonctionnellement à ladite pluralité de stations émettrices-réceptrices de base et apte à générer de manière aléatoire des décalages variables, à un niveau système, destinés à être utilisés dans ladite pluralité de stations émettrices-réceptrices de base.

8. Système selon la revendication 6 ou la revendication 7, qui est apte à fonctionner selon un protocole de communication par accès multiple du type multiplexage par répartition dans le temps (TDMA).

9. Système selon la revendication 8, lequel système est apte à fonctionner selon un protocole conforme à la norme de radiocommunication terrestre à ressources partagées (TETRA).

10. Procédé de fonctionnement dans un système de communication sans fil (300) comprenant au moins une station émettrice-réceptrice de base (322) desservant une unité distante (312-316) en une ressource de communication (318-320), l'au moins une station émettrice-réceptrice de base (322) comprenant une pluralité d'émetteurs-récepteurs (420) ayant un émetteur radio (421) qui émet à destination de l'unité distante (312-316) sur un canal de communication sortant et un récepteur radio (422) qui reçoit en provenance de l'unité distante (312-316) sur un canal de communication entrant, le canal de communication entrant présentant un décalage de fréquence par rapport au canal sortant, le procédé comprenant les étapes de :

génération aléatoire, par un élément (410, 342, 346), qui est fonctionnellement inclus ou couplé à ladite au moins une station émettrice-réceptrice de base (322), d'une pluralité de décalages de fréquence différents, fourniture à l'au moins une station émettrice-réceptrice de base (322) d'une indication des différents décalages destinés à être utilisés par les différents émetteurs-récepteurs (420) de l'au moins une station (322), et utilisation des différents décalages générés de manière aléatoire fournis à chacun des émetteurs-récepteurs (420) en tant qu'espacement en fréquence variable entre une paire de canaux pour les transmissions sortantes et entrantes de chaque émetteur-récepteur respectif.

11. Procédé selon la revendication 10, dans lequel les étapes de génération aléatoire et de fourniture d'une indication desdits décalages sont effectuées par un contrôleur (410) inclus dans la station émettrice-réceptrice de base (322).

12. Procédé selon la revendication 10, dans lequel les étapes de génération aléatoire et de fourniture d'une indication desdits décalages sont effectuées à un niveau système par un contrôleur central (342, 346) pour configurer des décalages en ressource de communication destinés à être utilisés dans chaque station d'une pluralité de stations émettrices-réceptrices de base (322-332).

13. Procédé selon l'une quelconque des revendications précédentes 10, 11 ou 12, lequel procédé comprend en outre :

la transmission d'un message chiffré, par ladite au moins une station émettrice-réceptrice de base (322), à l'unité distante (312-316) sur une ressource de communication sortante, ledit message chiffré informant l'unité distante (312-316) du décalage de fréquence à utiliser pour la détermination d'un canal à utiliser pour les communications entrantes à destination de l'émetteur-récepteur (420).

14. Procédé selon la revendication 13, dans lequel le message chiffré comprend un indicateur de validité indiquant une période de validité pendant laquelle le décalage doit être appliqué.

FIG. 1

**FIG. 2**

FIG. 3

FIG. 4

400

322

415

420

455

430

410

420

445

421  422

420

440

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1058421 A